(19) Europäisches Patentamt / European Patent Office / Office européen des brevets

(11) **EP 4 095 729 A1**

(12) **EUROPEAN PATENT APPLICATION**

(43) Date of publication:
**30.11.2022 Bulletin 2022/48**

(21) Application number: **22175728.9**

(22) Date of filing: **27.05.2022**

(51) International Patent Classification (IPC):
**G06F 21/57** (2013.01)   **G06F 21/76** (2013.01)
**G06F 30/3323** (2020.01)

(52) Cooperative Patent Classification (CPC):
**G06F 21/577; G06F 21/76; G06F 30/3323**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021 GB 202107719**

(71) Applicant: **Imagination Technologies Limited**
**Kings Langley, Hertfordshire WD4 8LZ (GB)**

(72) Inventor: **MCKELLAR, Colin**
**Kings Langley, WD4 8LZ (GB)**

(74) Representative: **Slingsby Partners LLP**
**1 Kingsway**
**London WC2B 6AN (GB)**

(54) **METHODS AND SYSTEMS FOR MEASURING THE SECURITY OF AN ELECTRONIC DEVICE COMPRISING HARDWARE AND SOFTWARE**

(57)   A method of assessing the security of an electronic device comprising software and hardware. The method includes: performing one or more security tests on the software; generating one or more software security metrics based on results of the one or more security tests performed on the software; performing one or more security tests on an integrated circuit hardware design for the hardware; generating one or more hardware security metrics based on results of the one or more security tests performed on the integrated circuit hardware design; and generating one or more electronic device security metrics based on the one or more hardware security metrics and the one or more software security metrics, the one or more electronic device security metrics providing a quantitative indication of the security of the electronic device

FIG. 1

**Description**

BACKGROUND

For many systems and/or environments it is important that the electronic devices that operate therein are secure. A secure electronic device is one that will operate as expected both under normal and abnormal operating conditions. Specifically, a secure electronic device is one that will continue to operate as expected even if there is a fault in the electronic device, caused by, for example a fault in the software or hardware. In other words, a secure electronic device is one that is safe from threats or dangers. Faults may be caused by a bug in the software or hardware, unexpected events that affect the hardware or software, or by a malicious attack that affects the software or hardware. An electronic device that is not secure, and thus is susceptible to a malicious attack and unexpected events, can be caused to operate in a different manner than intended. In other words, an unexpected event or an attacker can change or alter the functionality of an insecure electronic device. This can have a disastrous effect on the system or environment in which the electronic device operates.

This is particularly true for electronic devices that perform mission critical functions, such as, but not limited to, electronic devices that form part of critical infrastructures or safety systems. Some of the electronic devices that are most susceptible to attack are those, such as mobile phones or processors in an automobile, that are connected to the Internet, or other network, in such a manner that allows them to be remotely accessed (e.g. accessed via a computer or electronic device that is remotely located therefrom). This is because such devices can be attacked remotely (e.g. without being in the physical vicinity of the device). With the explosion of the Internet of Things (IoT) more and more of such devices are being deployed daily.

Since it is advantageous to know, before deploying an electronic device, that the electronic device is secure, it is desirable to be able to measure or assess the security of an electronic device prior to deployment.

The embodiments described below are provided by way of example only and are not limiting of implementations which solve any or all of the disadvantages of known methods and systems for assessing the security of an electronic device.

SUMMARY

This summary is provided to introduce a selection of concepts that are further described below in the detailed description. This summary is not intended to identify key features or essential features of the claimed subject matter, nor is it intended to be used to limit the scope of the claimed subject matter.

Described herein are methods of assessing the security of an electronic device comprising software and hardware. The methods include: performing one or more security tests on the software; generating one or more software security metrics based on results of the one or more security tests performed on the software; performing one or more security tests on an integrated circuit hardware design for the hardware; generating one or more hardware security metrics based on results of the one or more security tests performed on the integrated circuit hardware design; and generating one or more electronic device security metrics based on the one or more hardware security metrics and the one or more software security metrics, the one or more electronic device security metrics providing a quantitative indication of the security of the electronic device.

A first aspect provides a computer-implemented method of assessing the security of an electronic device comprising software and hardware, the method comprising: performing one or more security tests on the software; generating one or more software security metrics based on results of the one or more security tests performed on the software; performing one or more security tests on an integrated circuit hardware design for the hardware; generating one or more hardware security metrics based on results of the one or more security tests performed on the integrated circuit hardware design; and generating one or more electronic device security metrics based on the one or more hardware security metrics and the one or more software security metrics, the one or more electronic device security metrics providing a quantitative indication of the security of the electronic device.

Performing one or more security tests on the integrated circuit hardware design for the hardware may comprise performing one or more correctness tests on the integrated circuit hardware design to verify a correctness of the integrated circuit hardware design; and generating one or more hardware security metrics based on the results of the one or more security tests performed on the integrated circuit hardware design may comprise generating one or more hardware correctness metrics based on results of the one or more correctness tests performed on the integrated circuit hardware design.

At least one of the correctness tests performed on the integrated circuit hardware design may comprise formally verifying, using a formal verification tool, one or more properties of the integrated circuit hardware design.

The hardware may implement a data transformation pipeline comprising one or more data transformation elements that perform a data transformation on one or more inputs, and performing at least one of the one or more correctness tests on the integrated circuit hardware design may comprise: formally verifying that a set of one or more outputs of an instantiation of the integrated circuit hardware design for the data transformation pipeline matches a set of one or more outputs of an instantiation of an integrated circuit hardware design for a second data transformation pipeline for a predetermined set of transactions, wherein the second data transformation pipeline comprises one or more data transformation elements that perform a data transformation on one or more inputs, a data transformation element of the second data transformation pipeline being substantially equivalent to a data transformation element of the data transformation pipeline; wherein the formal verification is performed under a constraint that the substantially equivalent data transformation elements of the data transformation pipeline and the second data transformation pipeline produce the same outputs in response to the same inputs.

The one or more hardware correctness metrics may indicate a percentage of code comprising all or a portion of the integrated circuit hardware design that has been successfully verified.

Performing one or more security tests on the integrated circuit hardware design for the hardware may comprise performing one or more fault injection tests on the integrated circuit hardware design; and generating one or more hardware security metrics based on the results of the one or more security tests performed on the integrated circuit hardware design may comprise generating one or more hardware security strength metrics based on results of the fault injection tests.

Performing the one or more fault injections tests on the integrated circuit hardware design may comprise: (a) receiving a raw fault node list identifying one or more fault nodes of the integrated circuit hardware design; (b) receiving information indicating a grouping of the fault nodes in the raw fault node list into a plurality of fault node groups, each fault node group comprising fault nodes that have a same effect on a failure mode of the integrated circuit hardware design; (c) generating a final fault node list based on the fault node groups; (d) selecting a set of fault injection parameters from the final fault node list, the set of fault injection parameters identifying at least one fault node in the final fault node list to fault; (e) performing a fault injection test on the integrated circuit hardware design by causing a fault to be injected into a simulation of the integrated circuit hardware design based on the selected set of fault injection parameters; (f) determining a result of the fault injection test; (g) storing the result of the fault injection test; and repeating (d) to (g) at least once.

Performing one or more security tests on the software may comprise performing one or more correctness tests on the software to verify a correctness of the software; and generating one or more software security metrics based on the results of the one or more security tests performed on the software may comprise generating one or more software correctness metrics based on results of the correctness tests performed on the software.

Performing one or more security tests on the software may comprise performing one or more fault injection tests on the software; and generating one or more software security metrics based on the results of the one or more security tests performed on the software may comprise generating one or more software security strength metrics based on results of the fault injection tests performed on the software.

The method may further comprise identifying relevant software components of the software, the relevant software components comprising the software components that interact with the hardware; and the one or more security tests performed on the software are configured to test the relevant software components.

Identifying the relevant software components of the software may comprise: identifying hardware control points which can be written to, accessed, or controlled by the software; and identifying the relevant software components as components of the software that interact with any of the identified hardware control points.

The method may further comprise identifying relevant hardware components of the hardware, the relevant hardware components being the hardware components that are controlled by the software; and the one or more security tests performed on the integrated circuit hardware design may be configured to test the relevant hardware components.

Identifying the relevant hardware components of the hardware may comprise: identifying hardware control points which can be written to, accessed, or controlled by the software; and identifying the relevant hardware components as components of the hardware that interact with any of the identified hardware control points.

The identified hardware control points may comprise one or more of a register, memory and a signal of the hardware.

A second aspect provides a system for assessing the security of an electronic device comprising software and hardware, the system comprising: at least one processor; and memory coupled to the at least one processor, the memory comprising computer readable code that when executed by the at least one processor causes the at least one processor to: perform one or more security tests on the software, generate one or more software security metrics based on results of the one or more security tests performed on the software, perform one or more security tests on an integrated circuit hardware design for the hardware, generate one or more hardware security metrics based on results of the one or more security tests performed on the integrated circuit hardware design, and generate one or more electronic device security metrics based on the one or more hardware security metrics and the one or more software security metrics, the one or more electronic device security metrics providing a quantitative indication of the security of the electronic device.

Performing one or more security tests on the integrated circuit hardware design for the hardware may comprise performing one or more correctness tests on the integrated circuit hardware design to verify a correctness of the integrated circuit hardware design; and generating one or more hardware security metrics based on the results of the one or more security tests performed on the integrated circuit hardware design may comprise generating one or more hardware correctness metrics based on results of the one or more correctness tests performed on the integrated circuit hardware design.

The hardware may implement a data transformation pipeline comprising one or more data transformation elements that perform a data transformation on one or more inputs, and performing at least one of the one or more correctness tests on the integrated circuit hardware design may comprise: formally verifying that a set of one or more outputs of an instantiation of the integrated circuit hardware design for the data transformation pipeline matches a set of one or more outputs of an instantiation of an integrated circuit hardware design for a second data transformation pipeline for a predetermined set of transactions, wherein the second data transformation pipeline comprises one or more data transformation elements that perform a data transformation on one or more inputs, a data transformation element of the second data transformation pipeline being substantially equivalent to a data transformation element of the data transformation pipeline; wherein the formal verification is performed under a constraint that the substantially equivalent data transformation elements of the data transformation pipeline and the second data transformation pipeline produce the same outputs in response to the same inputs.

Performing one or more security tests on the integrated circuit hardware design for the hardware may comprise performing one or more fault injection tests on the integrated circuit hardware design; and generating one or more hardware security metrics based on the results of the one or more security tests performed on the integrated circuit hardware design may comprise generating one or more hardware security strength metrics based on results of the fault injection tests.

Performing the one or more fault injections tests on the integrated circuit hardware design may comprise: (a) receiving a raw fault node list identifying one or more fault nodes of the integrated circuit hardware design; (b) receiving information indicating a grouping of the fault nodes in the raw fault node list into a plurality of fault node groups, each fault node group comprising fault nodes that have a same effect on a failure mode of the integrated circuit hardware design; (c) generating a final fault node list based on the fault node groups; (d) selecting a set of fault injection parameters from the final fault node list, the set of fault injection parameters identifying at least one fault node in the final fault node list to fault; (e) performing a fault injection test on the integrated circuit hardware design by causing a fault to be injected into a simulation of the integrated circuit hardware design based on the selected set of fault injection parameters; (f) determining a result of the fault injection test; (g) storing the result of the fault injection test; and repeating (d) to (g) at least once.

The computer readable code may further cause the one or more processors to identify relevant software components of the software, the relevant software components comprising the software components that interact with the hardware; and the one or more security tests performed on the software may be configured to test the relevant software components.

Identifying the relevant software components of the software may comprise: identifying hardware control points which can be written to, accessed, or controlled by the software; and identifying the relevant software components as components of the software that interact with any of the identified hardware control points.

The identified hardware control points may comprise one or more of a register, memory and a signal of the hardware.

The computer readable code may be further configured to cause the one or more processors to identify relevant hardware components of the hardware, the relevant hardware components being the hardware components that are controlled by the software; and the one or more security tests performed on the integrated circuit hardware design may be configured to test the relevant hardware components.

The electronic device may be embodied in hardware on an integrated circuit. There may be provided a method of manufacturing, at an integrated circuit manufacturing system, the electronic device. There may be provided an integrated circuit definition dataset that, when processed in an integrated circuit manufacturing system, configures the system to manufacture the electronic device. There may be provided a non-transitory computer readable storage medium having stored thereon a computer readable description of an electronic device that, when processed in an integrated circuit manufacturing system, causes the integrated circuit manufacturing system to manufacture an integrated circuit embodying the electronic device.

There may be provided an integrated circuit manufacturing system comprising: a non-transitory computer readable storage medium having stored thereon a computer readable description of the electronic device; a layout processing system configured to process the computer readable description so as to generate a circuit layout description of an integrated circuit embodying the electronic device; and an integrated circuit generation system configured to manufacture the electronic device according to the circuit layout description.

There may be provided computer program code for performing a method as described herein. There may be provided non-transitory computer readable storage medium having stored thereon computer readable instructions that, when executed at a computer system, cause the computer system to perform the methods as described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a flow diagram of a first example method for assessing the security of an electronic device comprising hardware and software;

FIG. 2 is a flow diagram of a second example method for assessing the security of an electronic device comprising hardware and software;

FIG. 3 is a block diagram of an example computing-based device; and

FIG. 4 is a block diagram of an example integrated circuit manufacturing system for generating an integrated circuit embodying an electronic device as described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art. Embodiments are described by way of example only.

The term electronic device is used herein to mean any device that comprises one or more electronic circuits which are configured to, or can be configured to, perform one or more functions. The electronic circuits of an electronic device may form one or more integrated circuits (ICs). Electronic devices include processors such as, but not limited to, central processing units (CPUs) and graphics processing units (GPUs), mobile phones, embedded devices, and any other similar devices. Most electronic devices comprise hardware components (e.g. one or more integrated circuits) and software that interacts with the hardware components (e.g. the software controls the operation of the hardware).

As described above, it is advantageous to know, before deploying an electronic device, that the electronic device is secure (or at least how secure it is). Specifically, knowing how secure an electronic device is, prior to deployment, allows a determination to made, based on one or more factors, whether an electronic device is to be deployed. For example, the one or more factors may comprise the function the electronic device is to perform (e.g. whether the electronic device forms part of a safety critical system). Accordingly, it is desirable to be able to measure or assess the security of an electronic device. More specifically, it is desirable to be able to provide a quantitative measurement or assessment of the security of an electronic device. This allows a determination to be made, by, for example, an electronic device manufacturer or an electronic device designer, as to whether the electronic device is secure enough for its intended purpose or function. Some purposes or functions may require 100% security (or as close thereto as possible) whereas others may not.

Since, as described above, most electronic devices are comprised of both software and hardware, and both the software and hardware can be susceptible to bugs and faults, an assessment of the security of the electronic device should take into account the security of the hardware and the software. However, to date, security has mostly been seen as a software issue - i.e. the software should have the ability to detect and recover from malicious attacks. Even then, there have been very few proven techniques for measuring the security of the software. There has been little focus on assessing the security of the hardware, despite the hardware also being susceptible to attacks and unexpected behaviour.

Accordingly, described herein are methods and systems for measuring the security of an electronic device that comprises hardware and software. The methods described herein comprise performing one or more security tests on the software of the electronic device and generating one or more software security metrics based on the results thereof which indicate the security of the software of the electronic device; performing one or more security tests on the hardware for the electronic device (e.g. an integrated circuit hardware design therefor) and generating one or more hardware security metrics based on the results thereof which indicate the security of the hardware of the electronic device; and

**EP 4 095 729 A1**

generating one or more electronic device security metrics based on the one or more software security metrics and the one or more hardware security metrics, the one or more electronic device security metrics providing a quantitative indication of the security of the electronic device.

As described above, a secure electronic device is one that will operate as expected both under normal and abnormal operating conditions. Specifically, a secure electronic device is one that will continue to operate as expected even if there is a fault in the electronic device, caused by, for example a fault in the software or hardware. Faults may be caused by a bug in the software or hardware, unexpected events that affect the hardware or software, or by a malicious attack that affects the software or hardware.

In general, faults can be categorised as systematic faults or random faults. Systematic faults are faults that occur in a deterministic way. These faults are often caused by errors in the software or hardware itself. Systematic faults may be identified using techniques designed to test the functionality of the hardware or software against the specification for the hardware or software, such as simulation-based verification and formal property verification. These types of verifications, which may also be referred to as correctness verifications, are thus intended to verify that the software or hardware will operate as expected under normal operating conditions - i.e. they determine whether the hardware or software does what it is intended to do. In contrast, random faults are unpredictable faults that occur during operation of the hardware or software. Random faults are classified into permanent faults (e.g. faults that, once manifested do not go away), which may also be referred to as hard errors; and transient faults (e.g. faults that exist for a short time), which may also be referred to as soft errors. The hardware and/or software of an electronic device may implement one or more safety mechanisms which are configured to detect such faults and, if detected, place the software or hardware in a safe state and/or inform the electronic device that the fault has occurred. How hardware or software deals with random faults may be tested via fault injection testing. Fault injection testing is a testing technique in which faults are deliberately introduced into the system or device under test to determine how the system or device responds to such faults. Fault injection testing may be used to assess the robustness of the software and hardware to random faults and to verify the safety mechanisms work as expected.

In the example methods described below for measuring the security of an electronic device, the one or more security tests performed on the software include at least one correctness test and at least one fault injection test, and the one or more security tests performed on the hardware include at least one correctness test and at least one fault injection test. However, this is an example only and other and/or different security tests may be performed on the software and/or hardware.

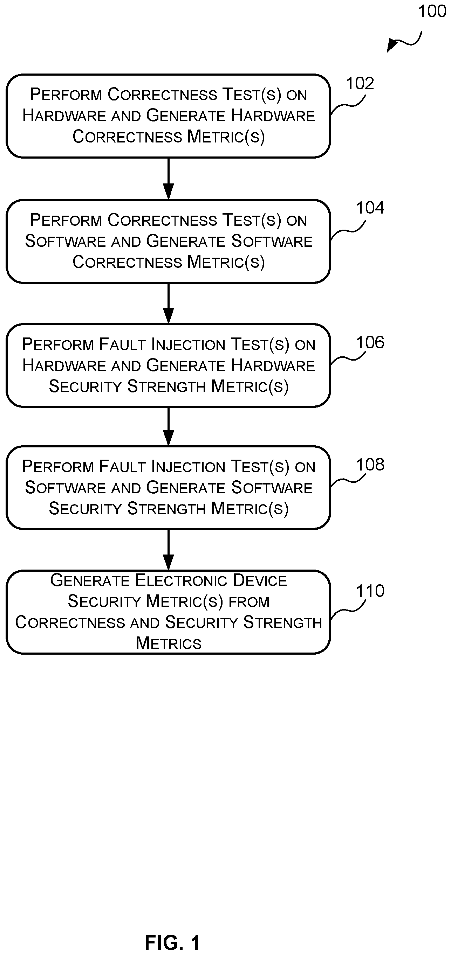

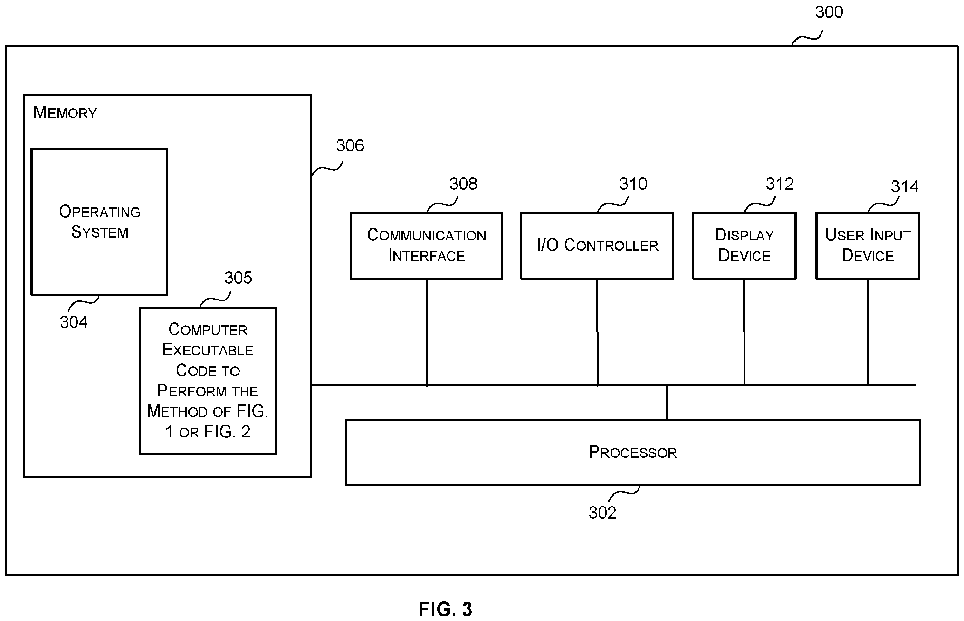

Reference is now made to FIG. 1 which illustrates a first example method 100 for measuring the security of an electronic device comprising hardware and software. One or more steps of the method 100 may be implemented by a computing-based device such as the computing-based device 300 described below with respect to FIG. 3. For example, there may be a computer readable storage medium having stored thereon computer readable code or instructions that, when executed at a computing-based device, cause the computing-based device to perform one or more steps of the method 100 of FIG. 1.

The method 100 begins at block 102 where one or more correctness tests are performed on an integrated circuit hardware design for the electronic device to verify the correctness of the integrated circuit hardware design, and one or more hardware correctness metrics $c_h$ are generated from the results of the one or more correctness tests. The one or more hardware correctness metrics $c_h$ provide a quantitative indication of the confidence or probability that the hardware (i.e. an instantiation of the integrated circuit hardware design) will operate as expected under normal operating conditions.

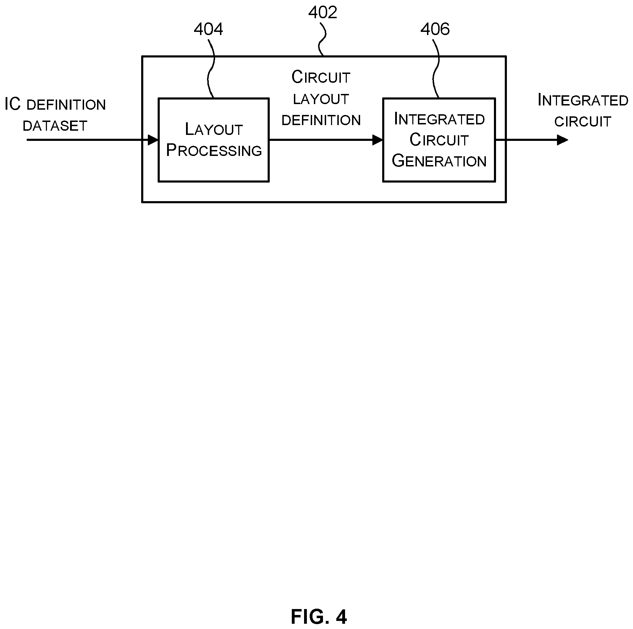

An integrated circuit hardware design, which may be referred to herein simply as a hardware design or an integrated circuit definition dataset, is a description of the structure and/or function of an integrated circuit which, when processed at an integrated circuit manufacturing system, causes the integrated circuit manufacturing system to generate an integrated circuit described by the hardware design. For example, as described in more detail below with respect to FIG. 4, when an integrated circuit hardware design is processed at an integrated circuit manufacturing system, the integrated circuit manufacturing system may generate an integrated circuit by synthesizing the integrated circuit hardware design into silicon, or, by loading configuration data into a field programmable gate array (FPGA).

An integrated circuit hardware design may be implemented in a high-level hardware description language (HDL), such as, but not limited to, a register transfer level (RTL) language. Examples of register transfer level languages include, but are not limited to, VHDL (VHSIC Hardware Description Language) and Verilog®. It will be evident to a person of skill in the art that other high-level hardware description languages may be used such as proprietary high level hardware description languages.

An instantiation of an integrated circuit hardware design is a representation of the hardware and/or functionality of the hardware defined by the integrated circuit hardware design. An instantiation of an integrated circuit hardware design includes, but is not limited to, an emulation model of the integrated circuit hardware design that simulates the behaviour of the hardware defined by the integrated circuit hardware design, a synthesized version (e.g. netlist) of the integrated circuit hardware design, a hardware implementation (e.g. integrated circuit or a field-programmable gate array

6

(FPGA)) of the integrated circuit hardware design, and a mathematical model of the integrated circuit hardware design generated by a formal verification tool. An instantiation of the integrated circuit hardware design embodies the integrated circuit hardware design in a form which can be tested to verify the hardware design.

In one example, at least one of the one or more correctness tests performed on the integrated circuit hardware design for the electronic device may be performed via formal verification.

Formal verification is a systematic process that uses a mathematical model of the integrated circuit hardware design and mathematical reasoning to verify the integrated circuit hardware design. In contrast, simulation-based verification is a process in which an integrated circuit hardware design is tested by applying stimuli to an instantiation of the integrated circuit hardware design and monitoring the output of the instantiation of the integrated circuit hardware design in response to the stimuli.

In formal verification, the hardware design is transformed into a mathematical model (e.g. a state-transition system, or a flow graph) to thereby provide an instantiation of the hardware design which can be tested to verify the hardware design, and formal properties to be verified are expressed using mathematical logic using a precise syntax or a language with a precise mathematical syntax and semantics.

Formal verification is performed using a formal verification tool (i.e. a software tool that is capable of performing formal verification of an integrated circuit hardware design). Examples of formal verification tools include formal equivalence checkers (e.g. Synopsys® HECTOR, and other logical equivalence checkers (LECs) and sequential logical equivalence checkers (SLECs)) and formal property checkers, which may also be referred to as formal model checkers, (e.g. OneSpin 360 DV™, Mentor Graphics Questa® Formal Verification, Synopsys® VC Formal, Cadence® Incisive® Enterprise Verifier, and JasperGold®).

There are many known methods for verifying the correctness of an integrated circuit hardware design using formal verification. Verifying the correctness of an integrated circuit hardware design using formal verification may comprise defining one or more properties to be verified and formally verifying the properties to be true for the integrated circuit hardware design using a formal verification tool. This type of verification may be referred to as formal property checking verification.

A property to be verified may be defined in an assertion. As is known to those of skill in the art, an assertion is a statement or expression that indicates that a formal property must be true for an instantiation of the hardware design to be behaving as expected. An example format for an assertion is "assert property [FORMAL PROPERTY STATEMENT]" which indicates that the FORMAL PROPERTY STATEMENT must be true. A formal property statement is a statement or expression that captures design behaviour. For example, a formal property statement for the property that signal a of the hardware design is equal to signal b of the hardware design may be a=b. Within HDL designs, a formal property statement is an executable statement that checks for specific behaviour within the HDL design. Formal property statements are used to capture required or desired temporal behaviour of an instantiation of the hardware design in a formal and unambiguous way.

Assertions are typically written in an assertion language. An assertion language, which also may be referred to as a property language, captures the design behaviour over multiple design cycles in a concise, unambiguous manner. While traditional hardware description languages (HDL), such as VHDL or Verilog RTL, have the ability to capture individual cycle behaviour, they are too detailed to describe properties at a higher level. In particular, assertion languages provide means to express temporal relationships and complex design behaviours in a concise manner. Assertion languages include, but are not limited to, SystemVerilog Assertions (SVA), Property Specification Language (PSL), Incisive® Assertion Library (IAL), Synopsys® OpenVera™ Assertions (OVA), Symbolic Trajectory Evaluation (STE), Hardware Property Language (HPL), 0-In®, and Open Verification Library (OVL).

An assertion is verified by searching the entire reachable state space of the instantiation of the hardware design (e.g. state-transition system, or flow graph) without explicitly traversing all the states. The search is done by, for example, encoding the states using efficient Boolean encodings using Binary decision diagrams (BDDS), or using advanced SAT (satisfiability-based bounded model checking) based techniques. In some cases, tools can be used to implement techniques, such as, but not limited to, abstraction, symmetry, symbolic indexing, and invariants to improve performance and achieve scalability. Since formal verification of a property algorithmically and exhaustively explores all valid input values over time, verifying a property in this manner allows a property to be exhaustively proved or disproved for all valid states.

When a formal verification tool is used to verify an assertion, the formal verification tool may output an indication of whether or not the assertion is valid (i.e. the asserted property is true for all valid states or sequences of states), which may also be referred to herein as the assertion being successfully verified. The output may be yes, the assertion is valid or has been successfully verified; no, the assertion is not valid (i.e. the asserted property it is not true or has failed for at least one valid state or sequence of states) or has not been successfully verified; or the formal verification was inconclusive. The formal verification may be inconclusive, for example, because the computing-based device running the formal verification tool has run out of memory or because the formal verification tool has determined that a certain amount of progress has not been made after a predefined period of time.

Where an assertion is not valid or has not been successfully verified, the formal verification tool may also output information indicating a state or sequence of states of the hardware design which causes the asserted property to fail. For example, the formal verification tool may output a trace of the verification indicating at what point, state or sequence of states the failure occurred (i.e. a counter example).

One example method for verifying the correctness of an integrated circuit hardware design via formal verification, and specifically an integrated circuit hardware design for a data transformation pipeline, is described in the Applicant's UK Patent No. 2572665 which is hereby incorporated by reference in its entirety.

As is known to those of skill in the art, a pipeline comprises a set of processing elements wherein the output of a processing element in the set is the input to a processing element in the set. A data transformation pipeline is a type of pipeline that is configured to perform a data transformation on a set of inputs. The term "data transformation" is used herein to mean any operation (e.g. mathematical operations such as, but not limited to, arithmetic operations including addition, subtraction, multiplication, division etc.) that can be performed on, or applied to, a set of data to produce new data. Accordingly, a data transformation pipeline receives a set of inputs and outputs the result of a data transformation performed on the set of inputs. A data transformation pipeline comprises at least one data transformation element configured to perform a data transformation on a set of inputs, but it may also include other types of processing elements. When a pipeline generates an output for a set of inputs the pipeline is said to execute a 'transaction'. Accordingly, a pipeline is said to execute the same transaction if it generates an output for the same set of inputs.

In some cases, verifying the correctness of an integrated circuit hardware design for a data transformation pipeline may comprise verifying that an instantiation of the integrated circuit hardware design produces the correct result to the data transformation regardless of when the transformation is performed. Specifically, since a data transformation pipeline may perform a transformation at any time after reset (e.g. immediately after reset, or, for example, 10,000 cycles after reset) and with a variable amount of latency (e.g. due to stalls or interrupts) it is important to verify that regardless of when the transformation is performed that an instantiation of the hardware design will produce the correct result to the transformation.

UK Patent No. 2572665 describes that an integrated circuit hardware design for a data transformation pipeline may be verified, via formal verification, by performing the formal verification under one or more conditions or restrictions that simplify the data transformation calculation that the formal verification tool has to perform which increases the likelihood that the formal verification converges. The one or more conditions or restrictions are configured to restrict the control of the data transformation pipeline, but not the inputs to the data transformation pipeline.

Specifically, UK Patent No. 2572665 describes that an integrated circuit hardware design for a data transformation pipeline may be verified by formally verifying that the output(s) of an instantiation of the integrated circuit hardware design for the data transformation pipeline match the output(s) of an instantiation of an integrated circuit hardware design for a second data transformation pipeline for a predetermined set of transactions. The second data transformation pipeline also comprises one or more data transformation elements that perform a data transformation on one or more inputs. At least one of the data transformation elements of the second data transformation pipeline is substantially equivalent to a data transformation element of the data transformation pipeline under test. The formal verification is performed under a constraint that the substantially equivalent data transformation elements of the data transformation pipeline under test and the second data transformation pipeline produce the same outputs in response to the same inputs.

Where the second data transformation pipeline is different than the data transformation pipeline under test then the method can be used to verify that the integrated circuit hardware design for the data transformation pipeline under test is functionally equivalent to the integrated circuit hardware design for the second data transformation pipeline. In contrast, where the second data transformation pipeline is the same as the data transformation pipeline under test then the method can be used to verify that the integrated circuit hardware design is consistent (i.e. that an instantiation of the integrated circuit hardware design will generate the same output in response to the same input(s) regardless of when the input(s) are processed). It is noted that this does not verify that an instantiation of the integrated circuit hardware design will always produce the correct result, only that an instantiation of the integrated circuit hardware design will produce the same result. However, this verification in combination with a verification that an instantiation of the integrated circuit hardware design produces the correct result for a data transformation performed on any set of inputs from a particular state of the pipeline exhaustively verifies that an instantiation of the integrated circuit hardware design will always produce the correct result to a transformation or a transaction.

Once the one or more correctness tests have been performed on the integrated circuit hardware design for the electronic device, one or more hardware correctness metrics $c_h$ are generated from the results of the correctness test(s). The one or more hardware correctness metrics $c_h$ provide a quantitative indication of the confidence or probability that the hardware (i.e. an instantiation of the integrated circuit hardware design) will operate as expected under normal operating conditions. The one or more hardware correctness metrics $c_h$ may, for example, be formed of a single value, a set of values, a single range and/or or a set of ranges.

In some cases, the one or more hardware correctness metrics $c_h$ may comprise at least one metric that indicates how much (e.g. what percentage) of the code forming the integrated circuit hardware design has been verified. For example, when a formal verification converges (e.g. the formal verification tool is able to determine conclusively that the property being verified is true for all possible states of an instantiation of the integrated circuit hardware design) then the property has been verified for 100% of the code forming the integrated circuit hardware design. In such cases, the hardware correctness metric $c_h$ may be set to 100 out of a possible 100. If, however, the formal verification does not converge - i.e. is inconclusive - because, for example, the computing-based device running the formal verification tool has run out of memory or because the formal verification tool has determined that a certain amount of time has elapsed, then the hardware correctness metric $c_h$ may be calculated based on, for example, the number of cycles of testing that were completed or the percentage of the code forming the integrated circuit hardware design that was verified. Such a correctness metric may be generated by the formal verification tool itself or by an external component based on the results of the formal verification.

Once the one or more hardware correctness metrics $c_h$ have been generated, the method 100 proceeds to block 104.

At block 104, one or more correctness tests are performed on the software for the electronic device to verify that the software will operate as expected under normal operating conditions, and one or more software correctness metrics $c_s$ are generated based on the results of the one or more correctness tests. The one or more software correctness metrics $c_s$ provide a quantitative indication of the confidence or probability that the software will operate as expected under normal operating conditions.

There are many methods known to those of skill in the art for verifying the correctness of software. For example, any of the methods described above for verifying the correctness of an integrated circuit hardware design may similarly be used to verify the correctness of software. Specifically, the correctness of software may be formally verified by a formal verification tool. Formal verification tools to verify software are typically separate and distinct from formal verification tools to verify an integrated circuit hardware design. Examples of formal verification tools to verify software include, but are not limited to, FormalCheck/xUML, ComFoRT, SPIN, Verisoft, Bandera, Java PathFinder, SLAM/Bebop, BLAST and CBMC. For example, SPIN performs LTL (linear temporal logic) model checking.

Once the one or more correctness tests have been performed on the software for the electronic device, one or more software correctness metrics $c_s$ are generated from the results of the correctness test(s). The one or more correctness metrics $c_s$ may comprise, for example, a single value, a set of values, a single range and/or a set of ranges. In some cases, the one or more correctness metrics $c_s$ may indicate how successful the one or more correctness tests were.

In some cases, the one or more software correctness metrics may comprise a metric that indicates how much (e.g. what percentage) of the software code has been verified. For example, if 100% of the software code has been verified, a software correctness metric may be set to 100 out of a possible 100. If, however, not all of the code was verified, the percentage of the software code that was verified may be used as the software correctness metric. Where the software is verified via formal verification, such a software correctness metric may be generated by the tool used to perform the formal verification or by an external component based on the results of the formal verification.

Once the one or more software correctness metrics have been generated, the method 100 proceeds to block 106.

At block 106, one or more fault injection tests are performed on an integrated circuit hardware design for the electronic device to measure the security strength of the integrated circuit hardware design, and one or more hardware security strength metrics $s_h$ are generated based on the results of the fault injection tests. Fault injection testing is a testing technique in which faults are deliberately introduced into the system or device under test to determine how the system or device responds to such faults. Fault injection testing can assess the robustness of the integrated circuit hardware design to random faults and to verify that the safety mechanisms (and the safety logic that implements those mechanisms) work as expected. The one or more hardware security strength metrics $s_h$ generated from the results of the fault injection testing provide a quantitative indication of the ability of the hardware (i.e. an instantiation of the integrated circuit hardware design) to deal with random faults.

As is known to those of skill in the art, there are many methods and techniques for performing fault injection testing on an integrated circuit hardware design. One example method which may be used to perform fault injection testing on an integrated circuit hardware design is described in the Applicant's UK Patent Application No. 2011901.2, which is herein incorporated by reference in its entirety.

UK Patent Application No. 2011901.2 describes that in complex hardware designs it is often unrealistic and impractical to test all possible fault nodes (i.e. elements of the integrated circuit hardware design, such as, but not limited to signals and ports, which can be faulted during simulation thereof). This is not only due to the high number of fault nodes in such hardware designs, and the simulation time associated therewith, but verification engineers also generally have a limited number of resources at their disposal. Accordingly, fault injection testing for complex hardware designs is often performed for a random selection of fault nodes. Therefore, to efficiently perform fault injection testing it is desirable that the fault nodes that are faulted in the fault injection tests be selected in a manner that minimizes the number of tests required to achieve the fault injection testing goal.

Accordingly, UK Patent Application No. 2011901.2 describes methods for simulation-based fault injection testing of an integrated circuit hardware design in which the fault nodes are grouped into fault node groups, and the fault node(s) to be faulted in each fault injection test of a fault campaign is/are selected based on the grouping of the fault nodes. A fault node group is a group of fault nodes that have the same effect on a failure mode to be tested. As is known to those of skill in the art, a failure mode is the manner in which a failure occurs, or the manner by which a failure is observed. In contrast to the cause of a failure, a failure mode describes the way a failure occurs. The failure modes of a hardware design may be identified by, for example, using a Failure Mode and Effects Analysis (FMEA) technique, or procedure, and the failure modes to be tested may be selected based on the safety goals.

Specifically, one method for performing fault injection testing on an integrated circuit hardware design described in UK Patent Application No. 2011901.2 comprises: (a) receiving a raw fault node list identifying one or more fault nodes of the hardware design; (b) receiving information indicating a grouping of the fault nodes in the raw fault node list into a plurality of fault node groups, each fault node group comprising fault nodes that have a same effect on a failure mode of the hardware design; (c) generating a final fault node list based on the fault node groups; (d) selecting a set of fault injection parameters from the final fault node list, the set of fault injection parameters identifying at least one fault node in the final fault node list to fault; (e) performing a fault injection test on the hardware design by causing a fault to be injected into a simulation of the hardware design based on the selected set of fault injection parameters; (f) determining a result of the fault injection test; (g) storing the result of the fault injection test; and repeating (d) to (g) at least once.

Once the one or more fault injection tests have been performed on the integrated circuit hardware design for the electronic device, one or more hardware security strength metrics $s_h$ (which may alternatively be referred to as hardware security weakness metrics) are generated from the results of the fault injection test(s). The one or more hardware security strength metrics $s_h$ provide a quantitative indication of the confidence or probability that the hardware (i.e. an instantiation of the integrated circuit hardware design) will operate as expected in the presence of random faults.

In some cases, the one or more hardware security strength metrics $s_h$ may indicate the success of the fault injection testing (e.g. fault campaign). For example, as described in UK Patent Application No. 2011901.2, per fault node group metrics may be generated. The per fault node group metrics may include, but are not limited to, the percentage of detected faults, the percentage of safe faults, the percentage of potentially unsafe faults, and the percentage of potentially unsafe lockup faults. Specifically, in some cases the result of a fault injection test may be determined to be: DETECTED FAULT if the relevant safety mechanism/safety logic detected the fault during the simulation; SAFE FAULT if the relevant safety mechanism/safety logic did not detect the fault during the simulation, but none of the errors set out in a test bench were identified during the simulation (e.g. the output of the hardware design matched the output of a reference model); POTENTIALLY UNSAFE FAULT if the relevant safety mechanism/safety logic did not detect the fault during the simulation, but at least one of the errors set out in the test bench were identified during the simulation (e.g. the output of the hardware design did not match the output of the reference model); and POTENTIALLY UNSAFE LOCKUP FAULT if the safety mechanism/safety logic did not detect the fault during simulation and the simulation did not progress to completion due to, for example, a timeout condition specified by the simulation tool itself or the test bench being reached.

Other per fault node group metrics which may be generated include, but are not limited to, the percentage of the fault nodes in the fault node group that were tested. In some cases, metrics for each failure mode may be generated by combining the metrics for the related fault node groups. For example, metrics for each failure mode may be generated to be an average of the corresponding metrics for the related fault node groups. In some cases, the failure mode metrics may be generated as a weighted average. In these cases, a weight may be assigned to each fault node group associated with the failure mode. In a similar manner, per fault node metrics may be generated and the per fault node group metrics may be generated from the fault node metrics for the fault nodes in that fault node group. The fault node group metrics may be generated from the fault node metrics in any suitable manner - e.g. average, weighted average etc.

The metrics that are generated, may be based on the design goals and the intent of the fault injection testing. For example, the intent of the fault injection testing or campaign may be to satisfy International Organization for Standardization (ISO) 26262 ("Road vehicles - Functional safety") ASIL A/B/C/D. ISO 26262 is an international standard for functional safety of electrical and/or electronic systems in production automobiles. ISO 26262 is a risk based safety standard, where the risk of a hazardous operational situation is qualitatively assessed and safety measures are defined to avoid or control systemic failures and to detect and control random hardware failures, or mitigate their effects. ISO 26262 Automotive Safety Integrity Level (ASIL) is a risk classification scheme defined by ISO 26262. ASILs establish safety requirements based on the probability and acceptability of harm. There are four ASILs identified by ISO 26262 - A, B, C and D. ASIL A represents the lowest degree and ASIL D represents the highest degree of hazard. Different components of a vehicle require different ASIL levels. An ASIL for an electronic component is established by performing hazard analysis and risk assessment. Determining whether a component satisfies a particular ASIL level requires determining three metrics: Failure-in-Time (FiT), single point fault (SPF) which is a measurement of SPF coverage, and latent fault metric (LFM) which is a measurement of latent fault coverage. These metrics may also be used to measure the success of the fault injection testing or the fault campaign. It will be evident to a person of skill in the art that this is an example only and the fault injection testing described herein may be performed for another purpose or intent.

Once the one or more hardware security strength metrics $s_h$ have been generated, the method 100 proceeds to block 108.

At block 108, one or more fault injection tests are performed on the software for the electronic device to determine the security strength of the software, and one or more software security strength metrics $s_s$ are generated based on the results of the fault injection tests. As described above, fault injection testing is a testing technique in which faults are deliberately introduced into the system or device under test to determine how the system or device responds to such faults. The one or more software security strength metrics $s_s$ provide a quantitative indication of the software's ability to deal with random faults.

There are many methods known to those of skill in the art for performing fault injection testing of software. For example, any of the methods described above for performing fault injection testing of an integrated circuit hardware design may similarly be used to perform fault injection testing of software. In another example, fault injection testing of software may be performed by corrupting the software by injecting faults therein and running software test library (STL) tests thereon. As is known to those of skill in the art, an STL is a collection of software-based safety mechanisms for testing faults. Specifically, an STL is a collection of tests that can be run with expected results and/or a definition of success. To determine the fault coverage it would be expected that a test would fail when a fault is inserted. The higher the number of faults that can be detected by failing a test, the better the fault coverage.

Once the fault injection test(s) have been performed on the software for the electronic device, one or more software security strength metrics are generated from the results of the fault injection test(s). The one or more software security strength metrics $s_s$ may comprise, for example, a single value, a set of values, a range and/or a set of ranges. In some cases, the higher a value or a range, the better the security strength of the software.

Once the one or more software security strength metrics $s_s$ have been generated, the method 100 proceeds to block 110.

At block 110, one or more electronic device security metrics $s_d$ are generated based on the correctness and security strength metrics $c_h$, $c_s$, $s_h$, $s_s$ generated in blocks 102, 104, 106 and 108. The one or more electronic device security metrics $s_d$ provide a quantitative indication of the security of the electronic device as a whole.

The one or more electronic device security metrics $s_d$ may be generated from the correctness and security strength metrics $c_h$, $c_s$, $s_h$, $s_s$ in any suitable manner. For example, a single electronic device security metric $s_d$ may be a sum of the correctness and security strength metrics for the hardware and software as shown in equation (1). In another example, a single electronic device security metric $s_d$ may be generated as a weighted sum of the correctness and security strength metrics for the hardware and software as shown in equation (2) where $a_0$, $a_1$, $a_2$ and $a_3$ are adjustable weights. In some cases, the weights $a_0$, $a_1$, $a_2$ and $a_3$ may be initially set to the same value and overtime they may be adjusted based on learnings from specific examples.

$$s_d = c_h + c_s + s_h + s_s \qquad (1)$$

$$s_d = (a_0 * c_{h)} + (a_1 * c_s) + (a_2 * s_h) + (a_3 * s_s) \qquad (2)$$

It will be evident to a person of skill in the art that these are just examples ways of generating an electronic device security metric from the software and hardware correctness and security strength metrics.

Once the one or more electronic device security metrics have been generated the one or more electronic device security metrics may be output (e.g. as a set of one or more signals) and/or stored in memory for later use.

As described above, the one or more electronic device security metrics $s_d$ may be used to determine whether or not the electronic device can be safely deployed for its intended purpose or function. In some cases, it may be determined that the electronic device can be safely deployed for its intended purpose or function if all, or at least one, of the electronic device security metrics exceeds a predetermined threshold. In some cases, there may be a separate threshold for each electronic device security metric. Performing the testing on the integrated circuit hardware design allows security issues with the hardware device to be identified and corrected early in the process (i.e. before money and time are invested in generating hardware manifestations thereof). In some cases, if it has been determined from the one or more electronic device security metrics that that the electronic device can be safety deployed for its intended purpose the electronic device may be manufactured from the hardware design for the electronic device, via, for example, an integrated circuit manufacturing system, such as the integrated circuit manufacturing system described below with respect to FIG. 4. In some cases, if it has been determined from the one or more electronic device security metrics that the electronic device cannot be safety deployed for its intended purpose then either or both of the software and hardware may be modified. The output from the software and hardware tests may indicate what aspects of the software and hardware respectively may be modified to improve the overall electronic device security metrics.

Although in the method 100 of FIG. 1, blocks 102, 104, 106 and 108 are implemented sequentially, it will be evident to a person of skill in the art that this is an example only and that blocks 102, 104, 106 and 108 can be performed in any order and any combination of blocks 102, 104, 106 and 108 may be performed in parallel or simultaneously.

In some cases, it may be difficult, due to the complexity of the hardware and/or software, to complete the correctness and/or fault injection tests for the integrated circuit hardware design and/or the software. Accordingly, in some cases, to make it possible to complete the correctness and fault injection tests, the correctness and/or fault injection tests may be restricted to the aspects of the hardware that interact with the software and vice versa. The boundaries between software and hardware tend to be some of the more vulnerable aspects of an electronic device with respect to security and safety. Accordingly, aspects of the software that interact with the hardware, and the aspects of the hardware that interact with the software tend to be more vulnerable with respect to security and safety than aspects of the software that do not interact with the hardware and aspects of the hardware that do not interact with the software.

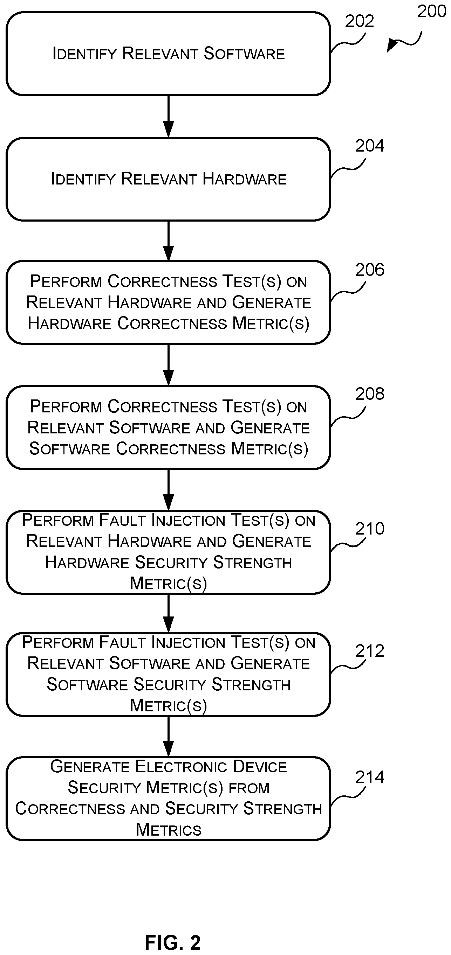

Reference is now made to FIG. 2 which illustrates a second example method 200 for measuring the security of an electronic device comprising hardware and software. The method 200 of FIG. 2 is similar to the method 100 of FIG. 1 in that it comprises performing correctness and fault injection tests on the hardware (e.g. integrated circuit hardware design therefor) and the software, generating software and hardware correctness and security strength metrics therefrom, and generating one or more electronic device security metrics from the correctness and security strength metrics. However, in the method 200 of FIG. 2 the correctness and fault injection tests are restricted to the hardware that interacts with the software (e.g. the hardware that is visible to, or controllable by, the software) and the software that interacts with the hardware (e.g. kernel and low level software). One or more steps of the method 200 of FIG. 2 may be implemented by a computing-based device such as the computing-based device 300 described below with respect to FIG. 3. For example, there may be a computer readable storage medium having stored thereon computer readable code or instructions that, when executed at a computing-based device, cause the computing-based device to perform one or more steps of the method 200 of FIG. 2.

The method 200 begins at block 202 where the relevant software is identified. The relevant software is defined as the software components that interact with the hardware. This may include kernel software and low level software, such as, but not limited to, embedded software. In some cases, the relevant software may be identified manually by a verification and/or design engineer. For example, a verification and/or design engineer may first identify a list of hardware control points, or control interfaces, which can be written to, accessed, or controlled by the software. Examples of hardware control points include, but are not limited to, registers, memory, and signals (e.g. handshake signals, interrupt signals) which can be written to, accessed, or controlled by the software. A list of hardware control points which can be written to, accessed, or controlled by the software may be identified from the documentation or specification for the hardware. The hardware control points that can be accessed or controlled by software is usually something that is well documented by hardware designers. Once the list of hardware control points have been identified, the software components that access or interact with any of the identified hardware control points may be identified and added to the list of relevant software components. In other cases, the relevant software may be generated by an automated or semi-automated process. For example, a software program may be configured to receive the specification for the hardware and extract therefrom a list of hardware control points which can be written to, accessed, or controlled by the software. Then, the software program may be configured to receive the software and extract therefrom the list of software components that interact with the identified hardware control points. Once the relevant software has been identified the method 200 proceeds to block 204.

At block 204, the relevant hardware is identified. The relevant hardware is defined as the hardware components that interact with the software. This may include the hardware components that are visible to, or controllable by, the software. The relevant hardware may be identified in a similar manner as the relevant software. For example, in some cases, the relevant hardware may be identified manually by a verification and/or design engineer. For example, a verification and/or design engineer may first identify a list of hardware control points, or hardware control interfaces (e.g. registers, memory, and/or signals (e.g. handshake signals, interrupt signals)) which can be written to, accessed, or controlled by the software. As described above, the list of hardware control points which can be written to, accessed, or controlled by the software may be identified from the documentation or specification for the hardware. Then, the hardware components that access any of the identified control points may be identified and added to the list of relevant hardware components. In other cases, the relevant hardware may be generated by an automated or semi-automated process. For example, a software program may be configured to receive the specification for the hardware and extract therefrom a list of hardware control points which can be written to, accessed, or controlled by the software, and then receive the integrated circuit hardware design and extract therefrom a list of hardware components that interact with the identified hardware control points. Once the relevant hardware has been identified the method 200 proceeds to block 206.

At block 206, one or more correctness tests are performed on the relevant hardware components of the integrated circuit hardware design for the electronic device to verify the correctness of the relevant hardware components, and one or more hardware correctness metrics $c_h$ are generated from the results of the correctness test(s). The one or more hardware correctness metrics $c_h$ provide a quantitative indication of the confidence or probability that the relevant hardware components will operate as expected under normal operating conditions. Block 206 generally corresponds to block 102 of the method 100 of FIG. 1 except that the one or more correctness tests are restricted to testing the relevant hardware identified in block 204. Accordingly, any of the methods of performing the correctness testing of hardware and generating hardware correctness metrics therefrom described above with respect to block 102 are equally applicable to block 206. Once the one or more hardware correctness metrics have been generated, the method 200 proceeds to block 208.

At block 208, one or more correctness tests are performed on the relevant software components to verify the correctness of the relevant software components, and one or more software correctness metrics $c_s$ are generated from the results of the correctness test(s). The one or more software correctness metrics $c_s$ provide a quantitative indication of the confidence or probability that the relevant software components will operate as expected under normal operating conditions. Block 208 generally corresponds to block 104 of the method 100 of FIG. 1 except that the one or more correctness tests are restricted to testing the relevant software identified in block 202. Accordingly, any of the methods of performing the correctness testing of software and generating software correctness metrics therefrom described above with respect to block 104 are equally applicable to block 208. Once the one or more software correctness metrics have been generated, the method 200 proceeds to block 210.

At block 210, one or more fault injection tests are performed on the relevant hardware components of the integrated circuit hardware design for the electronic device to measure the security strength of the relevant hardware components, and one or more hardware security strength metrics $s_h$ are generated based on the results of the fault injection tests. The one or more hardware security strength metrics $s_h$ provide a quantitative indication of the ability of the relevant hardware components to deal with random faults. Block 210 generally corresponds to block 106 of the method 100 of FIG. 1 except that the one or more fault injection tests are restricted to testing the relevant hardware identified in block 204. Accordingly, any of the methods of performing fault injection testing of an integrated circuit hardware design and generating hardware security strength metrics therefrom described above with respect to block 106 are equally applicable to block 210. Once the one or more hardware security strength metrics have been generated, the method 200 proceeds to block 212.

At block 212, one or more fault injection tests are performed on the relevant software components to measure the security strength of the relevant software components, and one or more software security strength metrics $s_s$ are generated based on the results of the fault injection tests. The one or more software security strength metrics $s_s$ provide a quantitative indication of the ability of the relevant software components to deal with random faults. Block 212 generally corresponds to block 108 of the method 100 of FIG. 1 except that the one or more fault injection tests are restricted to testing the relevant software components identified in block 202. Accordingly, any of the methods of performing fault injection tests on software and generating software security strength metrics therefrom described above with respect to block 108 are equally applicable to block 212. Once the one or more software security strength metrics have been generated, the method 200 proceeds to block 214.

At block 214, one or more electronic device security metrics $s_d$ are generated based on the correctness and security strength metrics $c_h$, $c_s$, $s_h$, $s_s$ generated in blocks 206, 208, 210 and 212. The one or more electronic device security metrics $s_d$ provide a quantitative indication of the security of the electronic device as a whole. Block 214 generally corresponds to block 110 of the method 100 of FIG. 1 except that the correctness and security strength metrics only describe the security of the relevant software and hardware components identified in blocks 202 and 204. Accordingly, any of the methods of generating the one or more electronic device security metrics described above with respect to block 110 are equally applicable to block 214.

Although in the method 200 of FIG. 2, blocks 202, 204, 206, 208, 210 and 212 are implemented sequentially, it will be evident to a person of skill in the art that this is an example only and that blocks 206, 208, 210, 212 can be performed in any order and any combination of blocks 206, 208, 210, 212 may be performed in parallel or simultaneously. It is also evident that blocks 202 and 204 can be performed in any order so long as block 202 is performed prior to blocks 208 and 212 and block 204 is performed prior to blocks 206 and 210.

FIG. 3 illustrates various components of an exemplary general purpose computing-based device 300 which may be implemented as any form of a computing and/or electronic device, and in which embodiments of the methods 100, 200 of FIGS. 1 and 2 described above may be implemented.

Computing-based device 300 comprises one or more processors 302 which may be microprocessors, controllers or any other suitable type of processors for processing computer executable instructions to control the operation of the device in order to measure or assess the security of an electronic device comprising software and hardware. In some examples, for example where a system on a chip architecture is used, the processors 302 may include one or more fixed function blocks (also referred to as accelerators) which implement a part of the method of measuring or assessing the security of an electronic device comprising software and hardware. Platform software comprising an operating system 304 or any other suitable platform software may be provided at the computing-based device to enable application software, such as computer executable code 305 for implementing one or more of the methods 100, 200 of FIGS. 1 and 2, to be executed on the device.

The computer executable instructions may be provided using any computer-readable media that is accessible by computing-based device 300. Computer-readable media may include, for example, computer storage media such as memory 306 and communications media. Computer storage media (i.e. non-transitory machine readable media), such as memory 306, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (i.e. non-transitory machine readable media, e.g. memory 306) is shown within the computing-based device 300 it will be appreciated that the storage may be distributed or located remotely and accessed via a network or other communication link (e.g. using communication interface 308).

The computing-based device 300 also comprises an input/output controller 310 arranged to output display information to a display device 312 which may be separate from or integral to the computing-based device 300. The display information may provide a graphical user interface. The input/output controller 310 is also arranged to receive and process input from one or more devices, such as a user input device 314 (e.g. a mouse or a keyboard). In an embodiment the display device 312 may also act as the user input device 314 if it is a touch sensitive display device. The input/output controller 310 may also output data to devices other than the display device, e.g. a locally connected printing device (not shown in FIG. 3).

The electronic devices described herein may be embodied in hardware on an integrated circuit. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture an electronic device. An integrated circuit definition dataset may be, for example, an integrated circuit description.

Therefore, there may be provided a method of manufacturing, at an integrated circuit manufacturing system, an electronic device as described herein. Furthermore, there may be provided an integrated circuit definition dataset that, when processed in an integrated circuit manufacturing system, causes the method of manufacturing an electronic device to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture an electronic device will now be described with respect to FIG. 4.

FIG. 4 shows an example of an integrated circuit (IC) manufacturing system 402 which is configured to manufacture an electronic device as described in any of the examples herein. In particular, the IC manufacturing system 402 comprises a layout processing system 404 and an integrated circuit generation system 406. The IC manufacturing system 402 is configured to receive an IC definition dataset (e.g. defining an electronic device as described in any of the examples herein), process the IC definition dataset, and generate an IC according to the IC definition dataset (e.g. which embodies an electronic device as described in any of the examples herein). The processing of the IC definition dataset configures the IC manufacturing system 402 to manufacture an integrated circuit embodying an electronic device as described in any of the examples herein.

The layout processing system 404 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 404 has determined the circuit layout it may output a circuit layout definition to the IC generation system 406. A circuit layout definition may be, for example, a circuit layout description.

The IC generation system 406 generates an IC according to the circuit layout definition, as is known in the art. For example, the IC generation system 406 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 406 may be in the form of computer-readable code which the IC generation system 406 can use to form a suitable mask for use in generating an IC.

The different processes performed by the IC manufacturing system 402 may be implemented all in one location, e.g. by one party. Alternatively, the IC manufacturing system 402 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture an electronic device without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 4 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 4 the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method (100, 200) of assessing the security of an electronic device comprising software and hardware, the method (100, 200) comprising:

   performing one or more security tests on the software (104, 108, 208, 212);
   generating one or more software security metrics based on results of the one or more security tests performed on the software (104, 108, 208, 212);
   identifying relevant hardware components of the hardware, the relevant hardware components being the hardware components that are controlled by the software;
   performing one or more security tests on an integrated circuit hardware design for the hardware to test the relevant hardware components (102, 106, 206, 210);
   generating one or more hardware security metrics based on results of the one or more security tests performed on the integrated circuit hardware design (102, 106, 206, 210); and
   generating one or more electronic device security metrics based on the one or more hardware security metrics and the one or more software security metrics, the one or more electronic device security metrics providing a quantitative indication of the security of the electronic device (110, 214).

2. The method (100, 200) of claim 1, wherein performing one or more security tests on the integrated circuit hardware design for the hardware comprises performing one or more correctness tests on the integrated circuit hardware design to verify a correctness of the integrated circuit hardware design (102, 206); and generating one or more hardware security metrics based on the results of the one or more security tests performed on the integrated circuit hardware design comprises generating one or more hardware correctness metrics based on results of the one or more correctness tests performed on the integrated circuit hardware design (102, 206).

3. The method (100, 200) of claim 2, wherein at least one of the one or more correctness tests performed on the integrated circuit hardware design comprises formally verifying, using a formal verification tool, one or more properties of the integrated circuit hardware design.

4. The method (100, 200) of claim 2 or claim 3, wherein the hardware implements a data transformation pipeline comprising one or more data transformation elements that perform a data transformation on one or more inputs, and performing at least one of the one or more correctness tests on the integrated circuit hardware design comprises:

   formally verifying that a set of one or more outputs of an instantiation of the integrated circuit hardware design for the data transformation pipeline matches a set of one or more outputs of an instantiation of an integrated circuit hardware design for a second data transformation pipeline for a predetermined set of transactions, wherein the second data transformation pipeline comprises one or more data transformation elements that perform a data transformation on one or more inputs, a data transformation element of the second data transformation pipeline being substantially equivalent to a data transformation element of the data transformation pipeline;
   wherein the formal verification is performed under a constraint that the substantially equivalent data transformation elements of the data transformation pipeline and the second data transformation pipeline produce the same outputs in response to the same inputs.

5. The method (100, 200) of any of claims 2 to 4, wherein the one or more hardware correctness metrics indicate a percentage of code comprising all or a portion of the integrated circuit hardware design that has been successfully verified.

6. The method (100, 200) of any preceding claim, wherein performing one or more security tests on the integrated circuit hardware design for the hardware comprises performing one or more fault injection tests on the integrated circuit hardware design (106, 210); and generating one or more hardware security metrics based on the results of the one or more security tests performed on the integrated circuit hardware design comprises generating one or more hardware security strength metrics based on results of the one or more fault injection tests (106, 210).

7. The method (100, 200) of claim 6, wherein performing the one or more fault injections tests on the integrated circuit hardware design comprises:

(a) receiving a raw fault node list identifying one or more fault nodes of the integrated circuit hardware design;
(b) receiving information indicating a grouping of the fault nodes in the raw fault node list into a plurality of fault node groups, each fault node group comprising fault nodes that have a same effect on a failure mode of the integrated circuit hardware design;
(c) generating a final fault node list based on the fault node groups;
(d) selecting a set of fault injection parameters from the final fault node list, the set of fault injection parameters identifying at least one fault node in the final fault node list to fault;
(e) performing a fault injection test on the integrated circuit hardware design by causing a fault to be injected into a simulation of the integrated circuit hardware design based on the selected set of fault injection parameters;
(f) determining a result of the fault injection test;
(g) storing the result of the fault injection test; and

repeating (d) to (g) at least once.

8. The method (100, 200) of any preceding claim, wherein performing one or more security tests on the software comprises performing one or more correctness tests on the software to verify a correctness of the software (104, 208); and generating one or more software security metrics based on the results of the one or more security tests performed on the software comprises generating one or more software correctness metrics based on results of the one or more correctness tests performed on the software (104, 208).

9. The method (100, 200) of any preceding claim, wherein performing one or more security tests on the software comprises performing one or more fault injection tests on the software (108, 212); and generating one or more software security metrics based on the results of the one or more security tests performed on the software comprises generating one or more software security strength metrics based on results of the one or more fault injection tests performed on the software (108, 212).

10. The method (200) of any preceding claim, further comprising identifying relevant software components of the software, the relevant software components comprising the software components that interact with the hardware; and the one or more security tests performed on the software are configured to test the relevant software components (202).

11. The method (200) of claim 10, wherein identifying the relevant software components of the software comprises:

identifying hardware control points which can be written to, accessed, or controlled by the software; and
identifying the relevant software components as components of the software that interact with any of the identified hardware control points.

12. The method (200) of any preceding claim, wherein identifying the relevant hardware components of the hardware comprises:

identifying hardware control points which can be written to, accessed, or controlled by the software; and
identifying the relevant hardware components as components of the hardware that interact with any of the identified hardware control points.

13. The method (200) of claim 11 or claim 12, wherein the identified hardware control points comprise one or more of a register, memory and a signal of the hardware.

14. A computer readable storage medium having stored thereon computer readable instructions that, when executed at a computer system, cause the computer system to perform the method (100, 200) of any of claims 1 to 13.

15. A system for assessing the security of an electronic device comprising software and hardware, the system comprising:

at least one processor; and
memory coupled to the at least one processor, the memory comprising computer readable code that when executed by the at least one processor causes the at least one processor to:

perform one or more security tests on the software,
generate one or more software security metrics based on results of the one or more security tests performed on the software,
identify relevant hardware components of the hardware, the relevant hardware components being the hardware components that are controlled by the software;
perform one or more security tests on an integrated circuit hardware design for the hardware to test the relevant hardware components,
generate one or more hardware security metrics based on results of the one or more security tests performed on the integrated circuit hardware design, and
generate one or more electronic device security metrics based on the one or more hardware security metrics and the one or more software security metrics, the one or more electronic device security metrics providing a quantitative indication of the security of the electronic device.

100

PERFORM CORRECTNESS TEST(S) ON HARDWARE AND GENERATE HARDWARE CORRECTNESS METRIC(S)  — 102

PERFORM CORRECTNESS TEST(S) ON SOFTWARE AND GENERATE SOFTWARE CORRECTNESS METRIC(S)  — 104

PERFORM FAULT INJECTION TEST(S) ON HARDWARE AND GENERATE HARDWARE SECURITY STRENGTH METRIC(S)  — 106

PERFORM FAULT INJECTION TEST(S) ON SOFTWARE AND GENERATE SOFTWARE SECURITY STRENGTH METRIC(S)  — 108

GENERATE ELECTRONIC DEVICE SECURITY METRIC(S) FROM CORRECTNESS AND SECURITY STRENGTH METRICS  — 110

**FIG. 1**

202

200

IDENTIFY RELEVANT SOFTWARE

204

IDENTIFY RELEVANT HARDWARE

206

PERFORM CORRECTNESS TEST(S) ON RELEVANT HARDWARE AND GENERATE HARDWARE CORRECTNESS METRIC(S)

208

PERFORM CORRECTNESS TEST(S) ON RELEVANT SOFTWARE AND GENERATE SOFTWARE CORRECTNESS METRIC(S)

210

PERFORM FAULT INJECTION TEST(S) ON RELEVANT HARDWARE AND GENERATE HARDWARE SECURITY STRENGTH METRIC(S)

212

PERFORM FAULT INJECTION TEST(S) ON RELEVANT SOFTWARE AND GENERATE SOFTWARE SECURITY STRENGTH METRIC(S)

214

GENERATE ELECTRONIC DEVICE SECURITY METRIC(S) FROM CORRECTNESS AND SECURITY STRENGTH METRICS

FIG. 2

300

MEMORY 306

OPERATING SYSTEM 304

COMPUTER EXECUTABLE CODE TO PERFORM THE METHOD OF FIG. 1 OR FIG. 2 — 305

COMMUNICATION INTERFACE 308

I/O CONTROLLER 310

DISPLAY DEVICE 312

USER INPUT DEVICE 314

PROCESSOR 302

**FIG. 3**

404    402    406

IC DEFINITION
DATASET

CIRCUIT
LAYOUT
DEFINITION

LAYOUT
PROCESSING

INTEGRATED
CIRCUIT
GENERATION

INTEGRATED
CIRCUIT

**FIG. 4**

Europäisches
Patentamt

European
Patent Office

Office européen
des brevets

# EUROPEAN SEARCH REPORT

**Application Number**

EP 22 17 5728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Na: "Application of Attack Potential to Smartcards and Similar Devices", , 1 June 2020 (2020-06-01), XP055886872, Retrieved from the Internet: URL:https://www.sogis.eu/documents/cc/domains/sc/JIL-Application-of-Attack-Potential-to-Smartcards-v3-1.pdf [retrieved on 2022-02-02] | 1-5,8-15 | INV. G06F21/57 G06F21/76 G06F30/3323 |
| A | * page 4, line 1 – page 6, line 25 * * page 13, line 20 – page 17, line 2 * ----- | 6,7 | |
| T | Bsi: "Guidelines for Developer Documentation according to Common Criteria Version 3.1", , 21 July 2017 (2017-07-21), XP055887330, Retrieved from the Internet: URL:https://www.commoncriteriaportal.org/files/ccfiles/CommonCriteriaDevelopersGuide_1_0.pdf [retrieved on 2022-02-03] * page 8, paragraph 2 – page 9, paragraph 2.2 * * page 12, paragraph 3.1.6 – page 13, paragraph 3.2 * * page 31, paragraph 7.2 – page 41, paragraph 7.4 * * page 72, paragraph 10 – page 78, paragraph 11 * ----- -/-- | | |

**TECHNICAL FIELDS SEARCHED (IPC)**

G06F

The present search report has been drawn up for all claims

| Place of search | Date of completion of the search | Examiner |
|---|---|---|
| Munich | 5 October 2022 | Sauzon, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 22 17 5728 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jafri Nisrine: "Formal fault injection vulnerability detection in binaries : a software process and hardware validation", , 28 November 2019 (2019-11-28), XP055885948, Retrieved from the Internet: URL:https://tel.archives-ouvertes.fr/tel-02385208/document [retrieved on 2022-02-01] | 1,6-15 | |
| A | * page 5, paragraph 1 - page 8, paragraph 1.3 * * page 41, paragraph 4 - page 46, paragraph 4.3 * * page 71, paragraph 8 - page 85, paragraph 9.3 * * page 109, paragraph 13 - page 113, paragraph 14 * ----- | 2-5 | |
| | | | TECHNICAL FIELDS SEARCHED (IPC) |

The present search report has been drawn up for all claims

| Place of search | Date of completion of the search | Examiner |
|---|---|---|
| Munich | 5 October 2022 | Sauzon, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2572665 A

- GB 2011901 A